# EUROPEAN PATENT APPLICATION

(11) **EP 4 616 704 A1**
(43) Date of publication of application: **17.09.2025**
(21) Application number: 24163665.3
(22) Date of filing: 14.03.2024
(51) Int. Cl.: A01G 25/00, B05B 15/60

(54) **WATERING ASSEMBLY**

(71) Applicant: Husqvarna AB, 561 82 Huskvarna (SE)
(72) Inventor: Kramer, Anna, 71729 Erdmannhausen (DE); Kaupp, Rainer, 89143 Blaubeuren (DE); Schenk, Christoph, 89610 Oberdischingen (DE)
(74) Representative: Finkele, Rolf

(57) **Abstract**

A watering assembly **(100, 500)** comprising a watering device **(102, 502),** a first mounting device **(104)** being an underground housing **(104)** installed below a ground surface **(900),** and having an opening **(109)** open to the ground surface **(900),** and a second mounting device **(504, 708, 812)** being an above-ground mounting device, particularly an above-ground plate, installed on the ground surface **(900).** The underground housing **(104)** is provided with a cover **(108)** at least partially covering the opening **(109).** The watering assembly **(100, 500)** is characterized in that the watering device **(102, 502)** is interchangeably, particularly tool-free interchangeably, mounted to the first mounting device **(104)** or the second mounting device **(504, 708, 812).**

## Description

### TECHNICAL FIELD

The present disclosure relates to a watering assembly. More specifically, the present disclosure relates to the watering assembly comprising a watering device couplable interchangeably to a first mounting device and a second mounting device such that the watering device may be used multifunctionally and in variety of applications.

### BACKGROUND

An irrigation system, particularly including a sprinkler may be used to irrigate agricultural crops, lawns, gardens, planted areas, landscapes, golf courses, and other areas. The irrigation system may additionally be used for controlling airborne dust. The irrigation system generally includes a sprinkler, a memory, and a controller configured to communicate with the memory. Further, the sprinkler may include a body defining a water channel, a sprinkler head fluidly coupled to the body, at least one nozzle disposed with the sprinkler head, and a valve fluidly coupled with the at least one nozzle. The sprinkler may be programmed to irrigate different geometrical areas with varying water supply through precise instructions which may be provided through the controller.

Such instructions are carefully programmed on the basis of watering requirements of premises where the sprinkler is installed. Also, an exact position of the sprinkler is also vital to the execution of the instructions in order to correctly meet the watering requirements of the particular premises. However, it may be difficult to install the sprinkler always at the same position and in the same orientation. Any such shift in a position or an orientation of the sprinkler compared to the position respectively orientation at which the sprinkler is initially installed and from where the controller is taking a reference position, may cause the watering through the sprinkler to be erroneous and may not fit the watering requirements of the particular premises. Thus, it is important that the sprinkler may be positioned accurately and repeatable at the same pre-defined positions thereafter.

An example is provided by WO 2021/138741 A1 (hereinafter referred to as the '741 reference). The '741 reference discloses a lawn maintenance device that is calibrated in the field by a user through a mobile software app to irrigate and/or fertigate one or more arbitrary geometrical areas defined by the user. Two spaced apart posts are mounted in a casing for structural support thereof as well as for mounting a sealed enclosure. A releasably attached stake is provided for securing the casing in the ground or against a vertical mounting surface. The device can be conveniently mounted in an unobtrusive location such as the sidewall of a house or a garage or a fence.

### SUMMARY OF THE INVENTION

It is an objective of the present invention to provide a watering device which may be used in a variety of different ways and at entirely different locations. Thereby, a user-friendly multi-purpose watering assembly may be provided.

According to an aspect of the present invention, a watering assembly comprising a watering device, a first mounting device being an underground housing installed below a ground surface, and having an opening open to the ground surface, and a second mounting device being an above ground mounting device, particularly an above ground plate, installed on the ground surface, is claimed. The underground housing is provided with a cover at least partially covering the opening. Further, the watering assembly is characterized in that the watering device is interchangeably, particularly tool-free interchangeably, mounted to the first mounting device or the second mounting device.

By interchangeably, particularly tool-free interchangeably, mounting the same watering device to entirely differently formed and used at least two mounting devices, the watering device may be used for multi-purposes and in a user friendly and ergonomic way. Additionally, the watering device can be positioned very precisely over at least two different mounting devices, and thereafter the watering device remains in the same position as the watering device is prohibited temporarily. At both mounting devices, the watering device cannot be actively removed from the respective mounting device to which the watering device is currently mounted.

The interchangeably mounting of the watering device over the first mounting device or the second mounting device is performed in a tool-free manner. A user does not need any complex or cumbersome usage of any type of tools to mount or unmount the watering device either to the first mounting device or the second mounting device. Therefore, the mounting respectively coupling and unmounting respectively decoupling of the watering device is quite efficient and easy to conduct, the watering device may be used on at least two pre-defined locations which are different to each other. This allows the user to cut down on costs and use one watering device for multiple locations. Further, the watering assembly may allow easy coupling and decoupling of the watering device with the first mounting device or the second mounting device. This may allow for multiple usage of the watering device with accurate positioning of the watering device relative to the first mounting device respectively the second mounting device in each instant. Overall, the whole watering assembly becomes easy to use for the user with improved accuracy of the watering operation.

As the watering device can be coupled and decoupled in a tool-free manner, a single watering device may be used to be mounted with multiple above-ground and underground mounting devices. The easily removable nature of the coupling makes it simple and convenient for a user to interchangeably use the watering device at multiple locations. Further, the coupling structures are provided such that the interchangeability is facilitated effectively.

The second mounting device being an above ground mounting device, particularly an above ground mounting plate, provides an easy to handle means to mount the watering device above-ground and facilitates the coupling of the watering device and the second mounting device without any complex arrangement or large number of parts.

The first mounting device being an underground housing provides a compact arrangement of mounting the watering device underground in a safe and secure manner. The underground housing may provide a connection to a water supply by a pipeline through a side wall of the underground housing.

According to an exemplary embodiment of the present invention, the watering device comprises a first coupling structure and a second coupling structure, wherein the first mounting device comprises a fourth coupling structure, and wherein the second mounting device comprises a fifth coupling structure. Further, the watering device is releasably mounted to the first mounting device by functional interaction of the first coupling structure with the fourth coupling structure such that a relative movement between the watering device and the first mounting device is temporarily inhibited, and the watering device is releasably mounted to the second mounting device by functional interaction of the second coupling structure with the fifth coupling structure such that a relative movement between the watering device and the second mounting device is temporarily inhibited.

Functional interaction of the first coupling structure with the fourth coupling structure such that a relative movement is temporarily inhibited actively locks the watering device against any movement relative to the first mounting device. Hence, the watering device has to be actively removed from the first mounting device. This ensures a substantially identical starting point for the watering device every time the watering device is coupled to the first mounting device. Further, functional interaction of the second coupling structure with the fifth coupling structure such that a relative movement is temporarily inhibited actively locks the watering device against any movement relative to the second mounting device. Hence, the watering device has to be actively removed from the second mounting device. This ensures a substantially identical starting point for the watering device every time the watering device is coupled to the second mounting device. Therefore, high precision repeatability is achieved in interchangeably coupling the watering device with the first mounting device or the second mounting device. This ensures accurate and precise watering of the surrounding areas to be watered, and conformity with the programmed watering instructions.

According to an exemplary embodiment of the present invention, the watering device further comprises a third coupling structure, the first mounting device and the second mounting device each further comprises a sixth coupling structure. The third coupling structure interacts with the sixth coupling structure of the first mounting device such that the watering device moves guided, particularly moves linearly guided, along a main surface of the first mounting device. Further, the third coupling structure interacts with the sixth coupling structure of the second mounting device such that the watering device moves guided, particularly moves linearly guided, along a main surface of the second mounting device.

The third coupling structure is couplable with both the sixth coupling structure of the first mounting device and the sixth coupling structure of the second mounting device. Hence, the third coupling structures is a common use structure which may be coupled to the sixth coupling structure formed on both the first mounting device and the second mounting device. Further, the first coupling structure as well as the second coupling structure are single use coupling structures which may either be coupled to the fourth coupling structure or the fifth coupling structure.

Moving guided, particularly moving linearly guided, may allow that a simple sliding motion of the watering device, as per instructions, us enough to ensure a secure and reliable coupling of the watering device over the first mounting device respectively the second mounting device, without any additional tools etc. The linear guided movement is simple and easy to achieve. Any user may easily follow an instruction and actuate/perform the linear movement. There are no complex angular positions to achieve or usage of any tools. A simple linear sliding movement of the watering device is required to achieve perpendicular coupling and decoupling of the watering device over the first mounting device respectively the second mounting device.

Further, without a defined reverse sliding movement, the watering device is inhibited from getting decoupled from the first mounting device respectively the second mounting device. Hence, the third coupling structure and the respective sixth coupling structure may ensure secure coupling of the watering device with the first mounting device and the second mounting device.

According to an exemplary embodiment of the present invention, the first coupling structure, the second coupling structure and the third coupling structure are formed apart from each other, particularly as separate parts. By forming the first coupling structure, the second coupling structure and the third coupling structure spaced apart from each other, they may be formed on different surfaces of the watering device. Additionally, each the first coupling structure, the second coupling structure and the third coupling structure may be optimized to its respective complementary coupling structure and functionality. Hence, the reliability of the mounting may be increased.

According to an exemplary embodiment of the present invention, the third coupling structure further interacts with the sixth coupling structure of the first mounting device such that a movement of the watering device away, particularly substantially perpendicular away, from the main surface of the first mounting device is inhibited. Further, the third coupling structure further interacts with the sixth coupling structure of the second mounting device such that a movement of the watering device away, particularly substantially perpendicular away, from the main surface of the second mounting device is inhibited.

After sliding the watering device relative to the main surface respectively mounting surface of the first mounting device, the third coupling structure interlocks with the sixth coupling structure of the first mounting device and disallows a movement of the watering device substantially perpendicular away from the first mounting device. Additionally, once the sliding movement is completed, the first coupling structure functionally interacts with the fourth coupling structure such that a relative movement between the watering device and the first mounting device is temporarily inhibited. Hence, the watering device is securely and immovable coupled to the first mounting device.

Further, after sliding watering device relative to the main surface respectively mounting surface of the second mounting device, the third coupling structure interlocks with the sixth coupling structure of the second mounting device and disallows a movement of the watering device substantially perpendicular away from the second mounting device. Additionally, once the sliding movement is completed, the second coupling structure functionally interacts with the fifth coupling structure such that a relative movement between the watering device and the second mounting device is temporarily inhibited. Hence, the watering device is securely and immovable coupled to the second mounting device.

According to an exemplary embodiment of the present invention, the third coupling structure comprises a T-profile, particularly extending away from a base surface of the watering device. Additionally, or alternatively, the sixth coupling structure comprises a groove, particularly a linear groove, formed on the main surface of the first mounting device and/or on the main surface of the second mounting device.

A T-profile advantageously provides a complementary shape which may be easily slid inside an opening respectively the groove on the main surface of the first mounting device and the second mounting device. Such a shape and structure allow for easy coupling and decoupling of the watering device and the first mounting device respectively the second mounting device without using any tools. Alternatively, other types of profiles and shapes may also be realized which may achieve similar results, for example W-profile or M-profile etc.

According to an exemplary embodiment of the present invention, the T-profile interacts with the groove of the first mounting device such that the watering device moves guided along the main surface of the first mounting device. Further, the T-profile interacts with the groove of the second mounting device such that the watering device moves guided along the main surface of the second mounting device.

The sixth coupling structures each complements the third coupling structure and receives the third coupling structure and secures the coupling of the watering device and the first mounting device respectively the second mounting device. According to an example, the third coupling structure may be a T-shaped profile, and the sixth coupling structures each may be a complementary groove which may allow the T-shaped profile to be inserted therein and couple the watering device with the first mounting device respectively the second mounting device.

The linear groove may be configured to enable the T-profile to be insertable and guidable moved along the groove. The groove further allows the T-profile to be slid along the groove and held secure coupling between the watering device and the first mounting device or the second mounting device.

Hence, an easy to manufacture and long-lasting coupling functionality for a guided linear movement may be provided.

According to an exemplary embodiment of the present invention, the first coupling structure comprises a tap connector, particularly mounted to a side surface of the watering device, and the fourth coupling structure comprises a hose connector, particularly mounted on a side surface of the first mounting device.

The tap connector is used as the first coupling structure to secure the coupling between the watering device and the first mounting device. The tap connector is inherently a reliable and easy means of coupling. The tap connector being used as the first coupling structure also saves space as an essential component of the water connection for the watering device is used for an additional functionality. Thereby, the entire watering assembly is made more efficient and ergonomic.

Further, when the watering device is mounted with an underground housing, it becomes difficult and clumsy to access the main surface of the first mounting device once the watering device is placed upon the first mounting device. The first coupling structure being provided on the side surface allows a user to easily handle the watering device and establish secure coupling with the first coupling structure, when the watering device is mounted within an underground housing.

The hose connector is particularly a quick connector, configured to be releasably coupled to the tap connector. The fourth coupling structure is provided at a side wall of the underground housing. The hose connector helps to secure a coupling when the watering device is mounted underground. Thus, using the hose connector to carry out an additional functionality makes the overall watering assembly consist of lesser number of parts and space and/or cost efficient.

According to an exemplary embodiment of the present invention, the watering device is releasably mounted to the first mounting device by functional interaction of the tap connector and the hose connector.

By functional interaction of the tap connector and the hose connector, the coupling between the watering device and the underground housing may be reliably provided by the inlet connection of the watering device. Hence, the coupling may have the additional functionality of a water connection.

According to an exemplary embodiment of the present invention, the second coupling structure comprises a hole, particularly formed in a base surface of the watering device, and/or the fifth coupling structure comprises a spring-loaded button, particularly provided at a main surface of the second mounting device.

When the watering device is mounted at an above-ground location, a user may have easy and convenient access to the upper side of the base surface of the second mounting device. Thus, the user may easily and conveniently press the spring-loaded button to decouple the watering device from the second mounting device, when mounted at an above-ground location.

Additionally, when the watering device is mounted underground and the second coupling structure is not used for coupling, the hole does not at all interfere with the first coupling structure respectively the tap connector during coupling or decoupling.

According to an exemplary embodiment of the present invention, the watering device is releasably mounted to the second mounting device by functional interaction of the hole and the spring-loaded button.

Thereby, the watering device may be decoupled from the above-ground mounting device by an easy to perform pushing of the button. Additionally, the coupling may be performed by sliding movement of the watering device relative to the second mounting device and an automatic insertion of the spring-loaded button into the hole from below. Hence, by functional interaction between the hole and the spring-loaded button, a user may efficiently and conveniently couple and decouple the watering device from the second mounting device, when the watering device is mounted above-ground.

According to an exemplary embodiment of the present invention, the mounting of the watering device to the second mounting device is released by pressing the spring-loaded button.

The spring-loaded button allows a single click to release for the coupling between the watering device and the second mounting device. Hence, a fail-safe and user-friendly decoupling is provided by the watering assembly.

According to an exemplary embodiment of the present invention, the second coupling structure comprises a spring-loaded lever comprising an extending portion on a free end, particularly a hemispherical-shaped extending portion, and/or the fifth coupling structure comprises a notch. In particular the spring-loaded lever is provided at a bottom side of the watering device. Further, particularly the notch is provided on a main surface of the second mounting device.

The hemispherical-shaped extending portion of the spring-loaded lever may correspond to a shape of the notch. Thereby, the lever and the notch provide an easy to install and deinstall coupling configuration, which is at the same time reliable and fail-safe.

According to an exemplary embodiment of the present invention, the watering device is releasably mounted to the second mounting device by functional interaction of the spring-loaded lever and the notch.

The spring-loaded lever is configured to be a neutral position when inserted into a corresponding notch. Thereby, when the watering device is moved into the coupling position with the second mounting device, the extending portion of the lever is forced by the spring force of the lever into the notch. Accordingly, caused by the movement of the watering device relative to the second mounting device in a direction opposite to the insertion direction, the extending portion of the spring-loaded lever glides out of the notch.

According to an exemplary embodiment of the present invention, the mounting of the watering device to the second mounting device is released by a movement of the watering device opposite to an insertion direction of the third coupling structure relative to the sixth coupling structure.

The notch and the spring-loaded lever together secure the coupling between the watering device and the second mounting device. In case of decoupling the watering device from the second mounting device, the notch allows sliding movement of the watering device in a direction opposite to that of the insertion direction for coupling. Thus, the notch provides a simple and elegant solution for coupling and decoupling of the watering device and the second mounting device through a sole movement of the watering device.

Further, the functional interaction of the third coupling structure and the respective sixth coupling structure, and thereafter the functional interaction of the first coupling structure with the fourth coupling structure or the second coupling structure with the fifth coupling structure, together provide a fail-safe coupling arrangement which prevents any accidental decoupling of the watering device and the first mounting device respectively the second mounting device. Thereby, the functional interaction of third coupling structure with the corresponding sixth coupling structure ensure correct positioning of the watering device on the first mounting device respectively the second mounting device. Further, thereafter, the functional interaction of the first coupling structure with the fourth coupling structure temporarily inhibits the movement of the watering device relative to the first mounting device. Alternatively, thereafter, the functional interaction of the second coupling structure with the fifth coupling structure temporarily inhibits the movement of the watering device relative to the second mounting device.

Before discussing the invention with the help of the drawings, the invention will be briefly discussed in general. There is an underground positioning of the watering device, particularly a sprinkler, in an underground housing respectively a shaft, with the sprinkler terminating at ground level. In addition, there is an above-ground positioning of the sprinkler on an above-ground mounting device, particularly on an above-ground plate. In order to be able to lock the sprinkler in its above-ground level position on a plate and in an underground position in a shaft, there are various locking options. This locking is to prevent the sprinkler from moving from its position, always being in the same position when repeatably installed and thus having the same starting point for watering. To position the sprinkler on the above-ground plate, place the sprinkler slightly to the left of the centre of the plate and then move it to the right on the plate. These two steps are also shown on the plate as instructions. When moving the sprinkler to the right, a T-profile is inserted into a groove in the plate. This shift positions the sprinkler on the plate. By moving the sprinkler to the final position, it is locked onto the plate to prevent further movement.

There are two different locking options. The sprinkler is locked on the plate by two spring-loaded levers in the base of the sprinkler with a hemisphere at each end and two notches in the plate. The lock can be released by pulling the sprinkler in the opposite direction of insertion. Alternatively, the sprinkler is locked in place by a hole in the base of the sprinkler and a spring-loaded button in the plate. The lock can be released by pressing the spring button. When the sprinkler is positioned in the underground shaft, it is locked in place by the water connection. This lock can be released by pulling the orange ring of the hose connector.

The sprinkler can be positioned very precisely and remains in this position. The sprinkler cannot be repositioned accidentally but must be actively removed from the coupled component. Technical advantages of the idea include the possibility to lock the sprinkler in an exact position and to remove it repeatedly. Further advantages include locking by a spring-loaded button and releasing the lock by pressing the spring-loaded button, locking by force with the spring levers. Thus, the sprinkler could be used in an underground position and with an above-ground plate with equal precision.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** illustrates a perspective view of a watering assembly comprising a watering device and a mounting device, installed in an underground position in accordance with an exemplary embodiment of the present disclosure;
**FIG. 2** illustrates a perspective view of a watering device in accordance with an exemplary embodiment of the present disclosure;
**FIG. 3A** illustrates a perspective view of a base of a watering device in accordance with an exemplary embodiment of the present disclosure;
**FIG. 3B** illustrates a perspective view of a mounting device in accordance with an exemplary embodiment of the present disclosure;
**FIG. 4A** illustrates a top perspective view of the watering device of **FIG.1** positioned inside the mounting device in an unlocked position, in accordance with an exemplary embodiment of the present disclosure;
**FIG. 4B** illustrates a top perspective view of the watering device of **FIG.1** positioned inside the mounting device in a locked position, in accordance with an exemplary embodiment of the present disclosure;
**FIG. 5** illustrates a perspective view of a further watering assembly comprising a watering device and a mounting device, in accordance with an exemplary embodiment of the present disclosure;
**FIG. 6A** illustrates a perspective view of a base of a watering device in accordance with an exemplary embodiment of the present disclosure;
**FIG. 6B** illustrates a perspective view of a mounting device in accordance with an exemplary embodiment of the present disclosure;
**FIG. 7A** illustrates a perspective view of a base of a further watering device in accordance with an exemplary embodiment of the present disclosure;
**FIG. 7B** illustrates a perspective view of a further mounting device in accordance with an exemplary embodiment of the present disclosure;
**FIG. 8A** illustrates a perspective view of a base of a further watering device in accordance with an exemplary embodiment of the present disclosure;
**FIG. 8B** illustrates a perspective view of a further mounting device in accordance with an exemplary embodiment of the present disclosure;
**FIG. 9A** illustrates the watering assembly of **FIG. 5** in an unmounted position, in accordance with an exemplary embodiment of the present disclosure; and
**FIG. 9B** illustrates the watering assembly of **FIG. 5** in a locked/mounted position, in accordance with an exemplary embodiment of the present disclosure.

### DETAILED DESCRIPTION OF THE DRAWINGS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

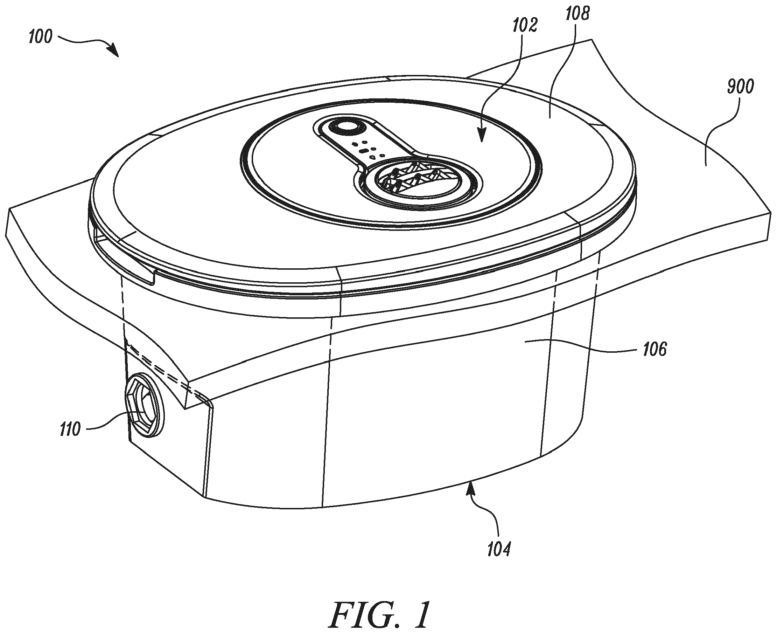

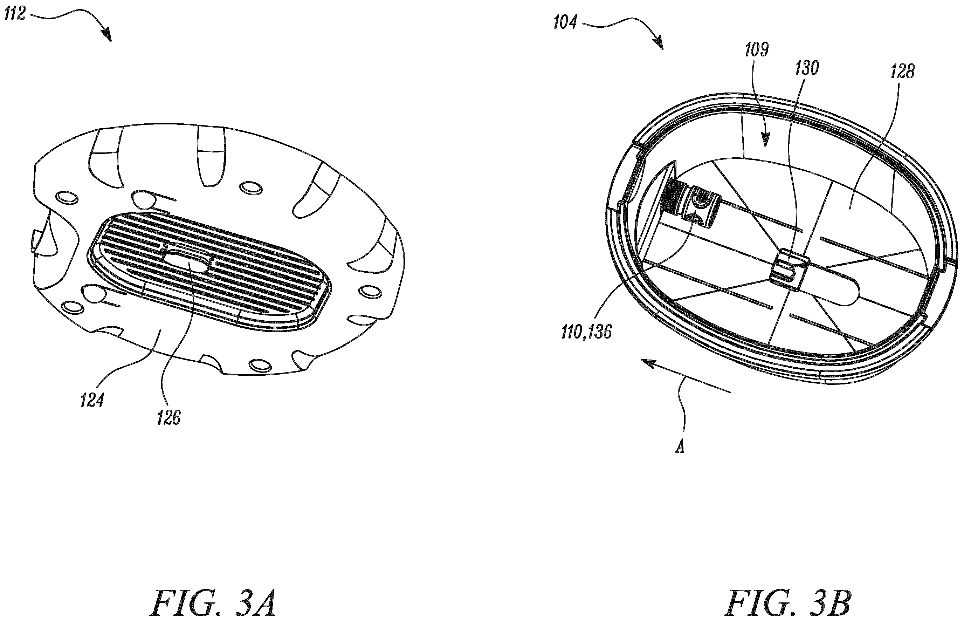

**FIG. 1** illustrates a watering assembly **100** according to an exemplary embodiment of the invention. The watering assembly **100** includes a watering device **102** and a first mounting device **104.** In the illustrated embodiment, the first mounting device **104** is a shaft respectively an underground housing **104** configured to mount the watering device **102** in an underground position. The underground housing **104** is mounted below a ground surface **900.** The first mounting device **104** has a body **106** and a cover **108.** The watering device **102** is placed within the body **106** of the first mounting device **104.** Thereafter, the cover **108** is placed on top of the body **106** to at least partially enclose an opening **109** (shown in **FIG. 3B**) of the watering device 102. The body 106 of the underground housing **104** further includes a water inlet **110.** The water inlet **110** may be fluidly coupled with a hose pipe, or a pipeline system placed underground to supply water to be supplied to irrigate the concerned area through the watering device **102.**

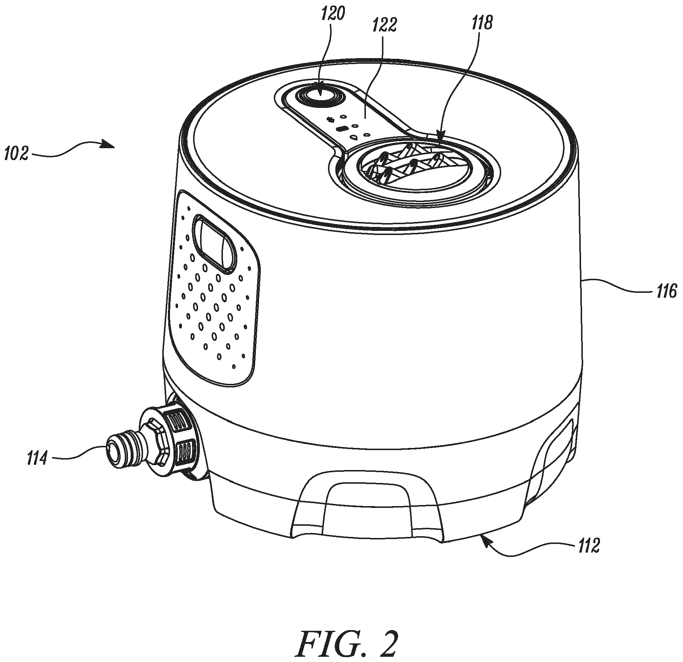

**FIG. 2** illustrates a watering device **102** according to an exemplary embodiment of the invention. The watering device **102** may be used for irrigation of agricultural crops, lawns, gardens, planted areas, landscapes, golf courses, and other areas. The watering device **102** may additionally be used for controlling airborne dust. The watering device **102** is illustrated as a sprinkler **102.**

The watering device **102** includes a base **112.** A tap connector **114** is coupled to the base **112.** The tap connector **114** receives water supply through a hose pipe or any such similar arrangements, and is embodied as a nipple, particularly an OGS nipple. The tap connector **114** may further be a first coupling structure **114** configured to couple the watering device **102** to the underground housing **104.** A body **116** of the watering device **102** is mounted on the base **112.** The body **116** may internally include a water channel (not shown) fluidly coupled with the tap connector **114** to allow water supply to a plurality of nozzles **118.** The nozzles **118** are configured to irrigate an area surrounding the watering device **102.** The nozzles **118** may be controlled through a controller which may be activated respectively deactivated by a button **120.**

The controller may be a single controller or a plurality of controllers performing various functions combined into a single module. The body **116** may further comprise a user interface **122** by which a user may get an output or provide an input or an instruction regarding the functioning of the watering device **102.** The user interface **122** and the button **120** are arranged adjacent to each other on a top surface of the body **116.** The controller may take into account various inputs regarding irrigation area, weather, climate, rainfall predictions etc. as well as irrigation requirements of the area to be irrigated and accordingly control the nozzles **118** to provide an irrigation pattern. The watering device **102** may have various other components as well.

**FIG. 3A** illustrates a base **112** of the watering device **102** as a standalone component to further demonstrate structural features of the base **112.** The base **112** of the watering device **102** comprises a base surface **124.** The base surface **124** is present at a bottom side of the watering device **102** and arranged facing away from the user interface **122** (shown in **FIG. 2**). Further, the base surface **124** comprises a third coupling structure **126.** The third coupling structure **126** is formed as a T-profile **126.** The T-profile **126** extends away from the base surface **124** of the watering device **102.**

**FIG. 3B** shows a perspective view of the first mounting device **104.** The first mounting device **104** is used for an underground installation of the watering device **102** and is an underground housing **104.** The watering device **102** may be installed underground within the underground housing **104.** The first mounting device **104** comprises the water inlet **110** to be connected to a pipeline system (not shown). The water inlet **110** is formed as a hose connector **136** configured to be connected with the tap connector **114** of the watering device **102** (shown in **FIG. 2**). In a first step, the first mounting device **104** is placed underground. In a second step, the watering device **102** is positioned within the underground housing **104** for installation. The button **120** and the user interface **122** are generally accessible to the user also after installation of the watering device **102** in the underground housing **104** and closure of the cover **109** (as illustrated in **FIG. 1**). The first mounting device **104** comprises a main surface **128** onto which the watering device **102** is mounted.

A sixth coupling structure **130** is formed on the main surface **128.** The sixth coupling structure **130** functionally interacts with the third coupling structure **126** such that the watering device **102** is positionable relative to the first mounting device **104** by allowing a guided movement of the watering device **102** along the main surface **128** of the first mounting device **104.** As illustrated in **FIG. 3B****,** the sixth coupling structure **130** is formed as an undercut portion extending from the main surface **128** such that it forms a linear groove **130** relative to the main surface **128.** Further, the groove **130** is configured to enable the T-profile **126** to be insertable and guidable moved along the groove **130.**

With combined reference to **FIG. 3A** and **FIG. 3B****,** the third coupling structure **126** positions the watering device **102** relative to the first mounting device **104.** The third coupling structure **126** positions the watering device **102** by allowing a linear guided movement of the watering device **102** along the main surface **128** of the first mounting device **104.** When the watering device **102** is linearly moved for connection purposes to the tap connector **114,** the watering device **102** is guided along a direction **A** extending parallel to the linear groove **130.** Hence, the direction **A** is an insertion direction or a coupling direction of the sixth coupling structure **130.**

A functional interaction of the T-profile **126** with the groove **130** positions the watering device **102** relative to the underground housing **104** in such a way that a movement of the watering device **102** substantially perpendicular away from the main surface **128** of the underground housing **104** is inhibited. When the third coupling structure **126** interacts with the sixth coupling structure **130,** the T-profile **126** gets engaged within the linear groove **130** formed by the undercut portion. After getting engaged with the linear groove **130,** at least some part of the T- profile **126** is positioned underneath the undercut portion after the guided linear movement in the direction A. Therefore, a movement of the watering device **102** substantially perpendicular away from the main surface **128** of the first mounting device **104** is inhibited.

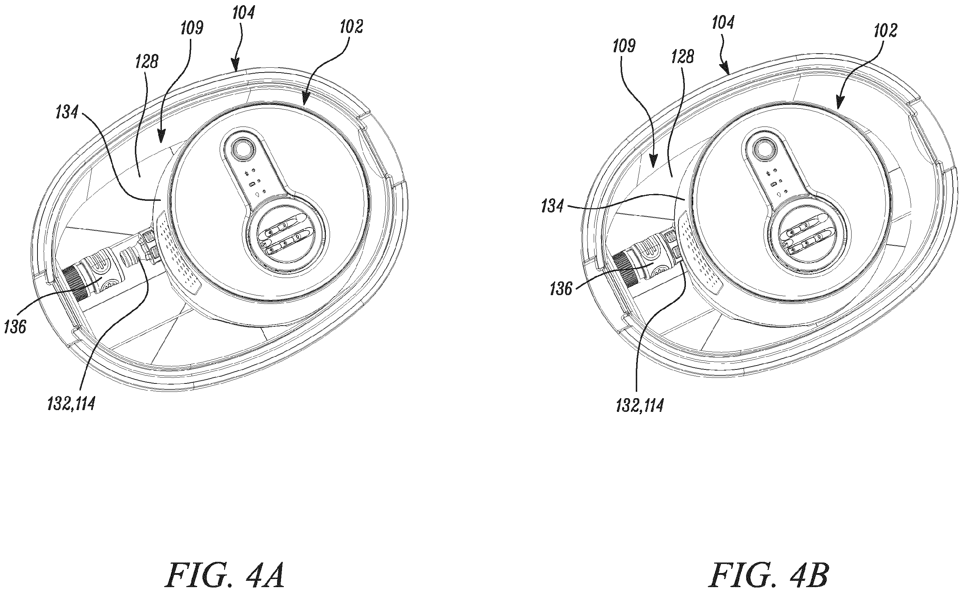

**FIG. 4A** illustrates the watering device **102** positioned within the first mounting device **104** in an unlocked position. The watering device **102** further includes a first coupling structure **132** formed as the tap connector **114** for coupling to the hose connector **136.** The tap connector **114** is mounted to a side surface **134** of the watering device **102.** The T-profile **126** and the tap connector **114** are formed as separate parts and spaced apart from each other on the watering device **102.**

As illustrated in **FIG. 4A****,** the underground housing **104** further includes a fourth coupling structure **136** formed as the hose connector **136** which functionally interacts with the tap connector **114** such that the watering device **102** is immovably holdable relative to the first mounting device **104** by temporarily inhibiting the guided movement of the watering device **102** relative to the main surface **128** of the first mounting device **104.** The fourth coupling structure **136** is mounted to a side wall **138** of the first mounting device **104.** The groove **130** and the hose connector **136** are formed as separate parts and spaced apart from each other on the underground housing **104.**

**FIG. 4B** illustrates the watering device **102** positioned within the first mounting device **104** in a locked position. The watering device **102** is interchangeably mounted to the underground housing **104.** The tap connector **114** is coupled with the hose connector 136. More specifically, the tap connector **114** is coupled with the hose connector 136. The watering device **102** is releasably coupled with the underground housing **104** by functional interaction of the T-profile **126** with the groove **130,** and simultaneous functional interaction of the tap connector **114** with the hose connector **136.** The first coupling structure **132** in functional interaction with the fourth coupling structure **136** immovably hold the watering device **102** relative to the first mounting device **104** such that the linear guided movement of the watering device **102** parallel to the main surface **128** of the first mounting device **104** is temporarily inhibited. At the same time, the third coupling structure **126** in functional interaction with the sixth coupling structure **130** of the underground housing **104** immovably hold the watering device **102** relative to the first mounting device **104** such that the movement substantially perpendicular away from the main surface **128** is inhibited.

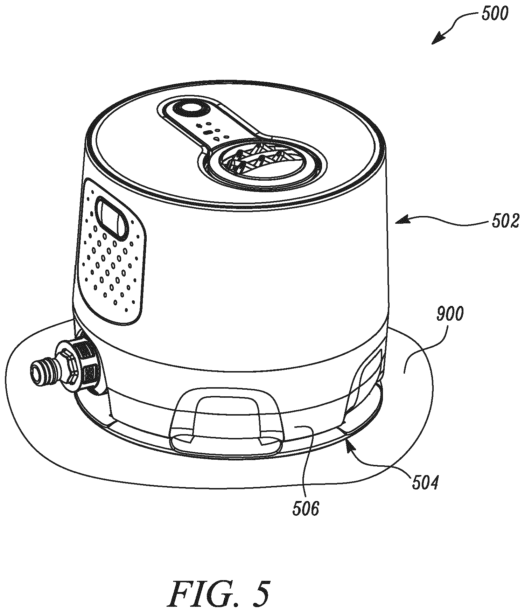

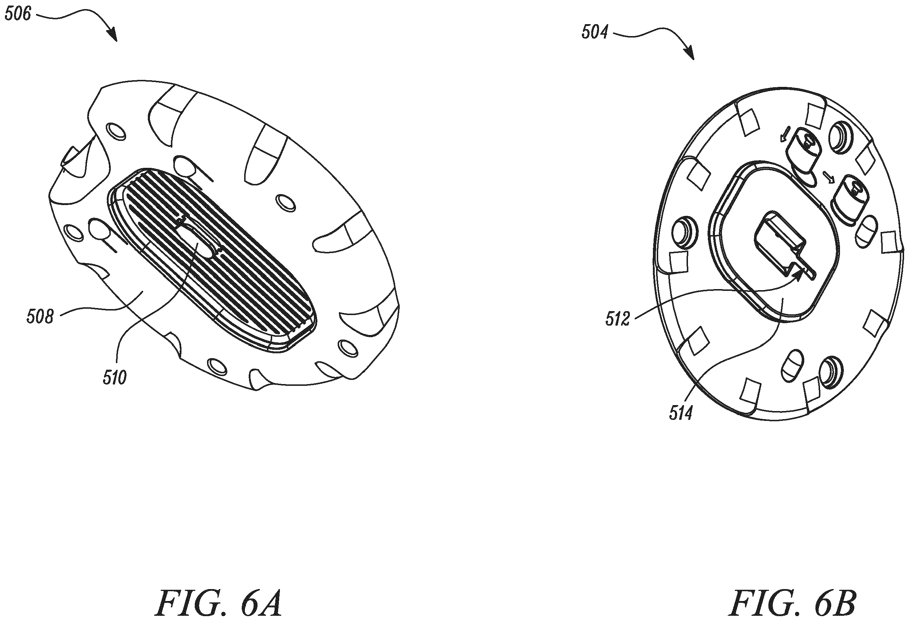

**FIG. 5** illustrates a further exemplary embodiment of a watering assembly **500.** The watering assembly **500** includes a watering device **502** and a second mounting device **504** being an above-ground mounting device **504** formed as an above-ground plate **504.** The watering device **502** includes a base **506.** In a first step, the above-ground plate **504** is mounted above-ground onto a ground surface **900.** In a second step, the watering device **502** is thereafter mounted on the above-ground plate **504** by functional interaction of a third coupling structure **510** being a T-profile **510** (shown in **FIG. 6A**) with a sixth coupling structure **512** being a groove **512** (shown in **FIG. 6B**), as well as by functional interaction of a second coupling structure **714, 806** with a fifth coupling structure **710, 814** (both not shown in **FIG. 5**).

**FIG. 6A** illustrates the base **506** of the watering device **502** as a standalone component to further demonstrate structural features of the base **506.** The base **506** of the watering device **502** comprises a base surface **508.** The base surface **508** is present at a bottom side of the watering device **502** and arranged facing away from the user interface **122** (shown in **FIG. 2**). The base surface **508** comprises a third coupling structure **510** being a T-profile **510.** The T-profile **510** extends away from the base surface **508** of the watering device **502.**

**FIG. 6B** illustrates the above-ground plate **504** as a standalone component. The above-ground plate **504** comprises a sixth coupling structure **512** being a groove **512** formed on a main surface **514** of the above-ground plate **504.** The groove **512** is configured to enable the T-profile **510** to be insertable and guidable moved along the groove **512.** The watering device **502** is positionable relative to the above-ground plate **504** by functional interaction of the T-profile **510** with the groove **512** such that a guided movement of the watering device **502** along a main surface **514** of the second mounting device **504** in the direction **A** is allowed.

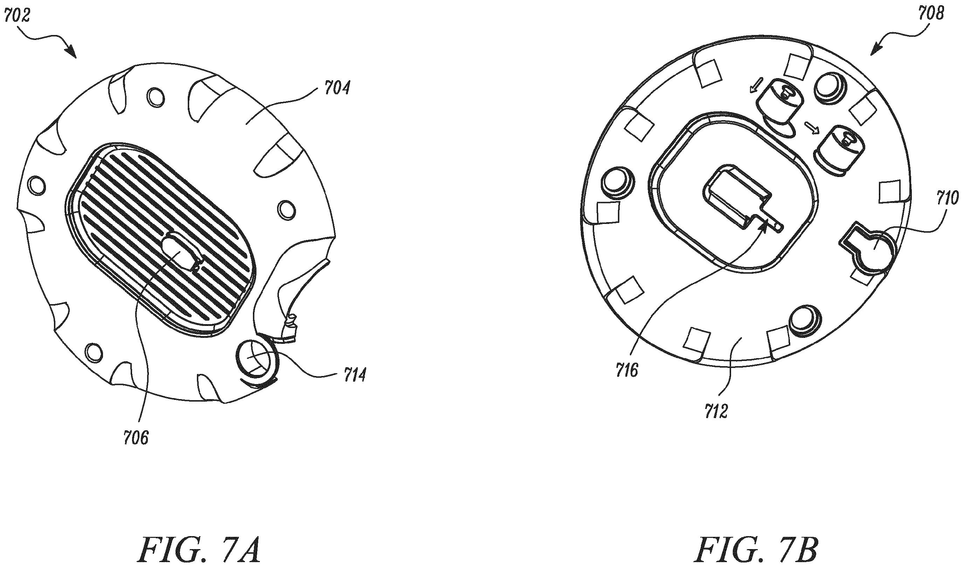

**FIG. 7A** illustrates another embodiment of a base **702** of a watering device **502.** The base **702** is illustrated as a standalone component to further demonstrate structural features of the base **702.** The base **702** of the watering device **502** comprises a base surface **704,** and a third coupling structure **706** being a T-profile **706** formed on the base surface **704.** The T-profile **706** extends away from the base surface **704** of the watering device **502.** The base **702** further comprises a second coupling structure **714** being a hole **714** formed in the base surface **704** of the watering device **502.** The third coupling structure **706** and the second coupling structure **714** are formed as separate parts and spaced apart from each other. Further, as may be seen in **FIG. 7A****,** the T-profile **706** is formed in proximity to a middle of the base surface **704** of the base **702,** and the hole **714** is formed in proximity to a circumferential edge of the base surface **704** of the base **702.**

**FIG. 7B** illustrates a further exemplary embodiment of a second mounting device **708** as a standalone component. The second mounting device **708** is an above-ground plate **708.** The second mounting device **708** comprises a sixth coupling structure **716** being a linear groove **716** provided at the main surface **712** of the second mounting device **708** and configured to enable the T-profile **706** to be insertable and guidable moved along the groove **716.** The groove **716** functionally interacts with the T-profile **706** such that the watering device **502** is positionable relative to the above-ground plate **708** by allowing a guided linear movement of the watering device **502** along the main surface **712** of the above-ground plate **708.**

The second mounting device **708** further includes a fifth coupling structure **710** being a spring-loaded button **710** provided on the main surface **712** of the second mounting device **708.** The spring-loaded button **710** is configured to releasably couple the watering device **502** with the above-ground plate **708.** Further, the spring-loaded button **710** is further configured to release the coupling between the watering device **502** and the above-ground plate **708** by pressing the spring-loaded button **710,** and at the same time relatively move the watering device **502** relative to the above-ground plate **702** in an opposite direction of the direction **A** (shown in **FIG. 3B**).

With combined reference to **FIG. 7A** and **FIG. 7B****,** the hole **714** formed in the base surface **704** of the watering device **502,** is configured to interact with the spring-loaded button **710** provided on the main surface **712** of the above-ground plate **708.** More generally, the second coupling structure **714** is configured to interact with the fifth coupling structure **710.** For coupling the watering device **502** to the above-ground plate **708,** the hole **714** receives the spring-loaded button **710** therein. Then, the functional interaction between the hole **714** and the spring-loaded button **710** couple the watering device **502** and the above-ground plate **708** together in an immovable manner. Further, when decoupling the watering device **502** from the above-ground plate **708,** the spring-loaded button **710** is pushed for disengaging the hole **714,** and at the same time the watering device **502** is linearly moved in a direction opposite to the direction A such that the T-profile **706** gets out of engagement with the groove **716.**

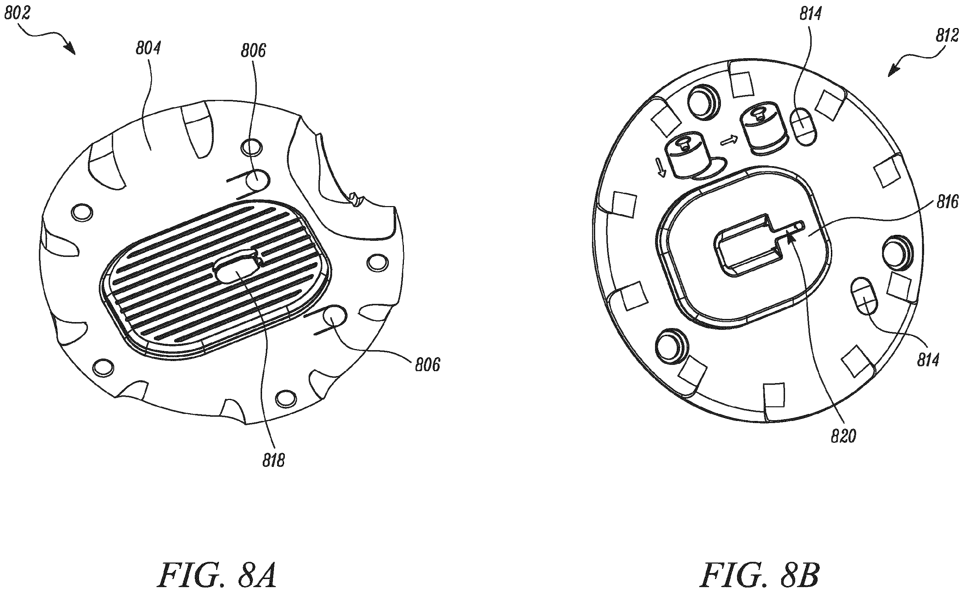

**FIG. 8A** illustrates a further exemplary embodiment of a base **802** of the watering device **502** as a standalone component to further demonstrate structural features of the base **802.** The base **802** of the watering device **502** comprises a base surface **804** and a third coupling structure **818** formed on the base surface **804.** The third coupling structure **818** is a substantially T-shaped profile **818.** The T-profile **818** extends away from the base surface **804** of the watering device **502.** The base **802** of the watering device **502** further comprises a second coupling structure **806** being two spring-loaded levers **806** each having an extending portion on a free end, particularly a hemispherical-shaped extending portion. The third coupling structure **818** and the second coupling structure **806** are formed as separate parts and spaced apart from each other. The T-profile **818** is formed in proximity to a middle of the base surface **804** of the base **802.** Each of the two spring-loaded levers **806** is formed further to an edge of the base surface **804** of the base **802.**

**FIG. 8B** illustrates a further exemplary embodiment of a second mounting device **812** as a standalone component. The second mounting device **812** is an above-ground plate **812.** The above-ground plate **812** includes a sixth coupling structure **820** functionally interacting with the third coupling structure **818** such that the watering device **502** is positionable relative to the second mounting device **812** by allowing a guided movement of the watering device **502** along a main surface **816** of the second mounting device **812.** The sixth coupling structure **820** is a groove **820** provided at the main surface **816** of the above-ground plate **812.** The linear groove **820** is configured to enable the T-profile **818** to be insertable and guidable moved along the groove **820.**

The second mounting device **812** further includes a fifth coupling structure **814** being a notch **814** formed in the main surface **816** of the second mounting device **812.** The notch **814** is configured to functional interact with the spring-loaded lever **806** such that the coupling between the watering device **502** and the above ground plate **812** is enabled. Further, the notch **814** is dimensioned and formed such that by exerting a lateral force on the watering device **502** the coupling between the watering device **502** and the above-ground plate **812** is decoupled. After decoupling of the extending portions of the spring-loaded levers **806** from the notches **814,** a linear movement of the watering device **502** relative to the above-ground plate **812** along a direction opposite to an insertion direction **A** is possible.

With combined reference to **FIG. 8A** and **FIG. 8B****,** each of the two spring-loaded levers **806** is formed in the base surface **804** of the watering device **502.** The two spring-loaded levers **806** functionally interact with the two notches **814** formed on the main surface **816** of the second mounting device **812.** For coupling the watering device **502** with the second mounting device **812,** the extending portions of the spring-loaded levers 806 couple with the respective one of the two notches **814.** Therefore, the second coupling structure **806,** namely the two extending portions of the spring-loaded levers **806,** and the fifth coupling structure **814,** namely the two notches **814,** hold the watering device **502** and the second mounting device **812** together in a laterally immovable manner. For decoupling, a user may move the watering device **502** and thereby the base **802** relative to the second mounting device **812** in a direction opposite to the insertion direction **A.**

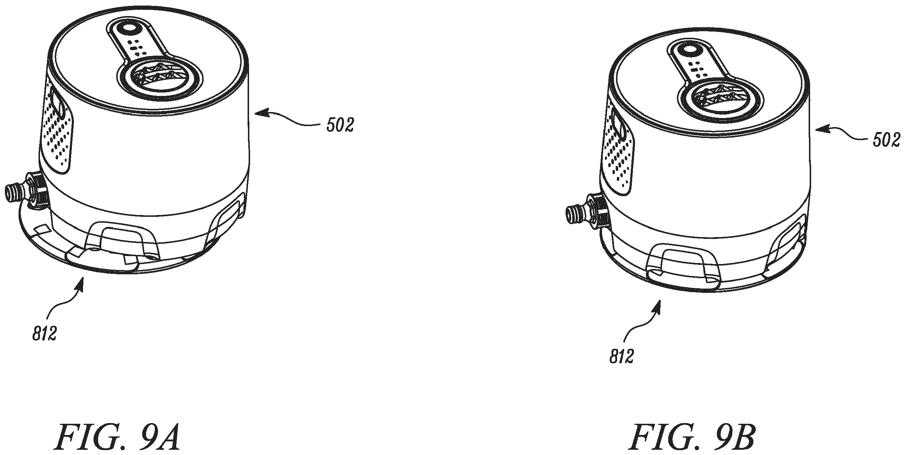

**FIG. 9A** shows the watering device **502** unmounted from the second mounting device **812** prior to mounting/locking the watering device **502** to the above-ground plate **812.** Further, **FIG. 9B** shows the watering device **502** mounted on the above-ground plate **812** in a locked position. During coupling of the watering device **502** with the second mounting device **812,** the watering device **502** is positioned on the above-ground plate **812** and moved in a linearly guided movement along the groove **820** to couple the watering device **502** with the above-ground plate **812.**

The watering device **102, 502** is interchangeably mountable to the underground housing **104** (as illustrated in **FIG. 1****,** **FIG. 3B****,** **FIG. 4A** and **FIG. 4B**) or the above-ground plate **504, 708, 812** being the above-ground plate (as illustrated in **FIG. 5****,** **FIG. 6B****,** **FIG. 7B****,** **FIG. 8B****,** **FIG. 9A** and **FIG. 9B**)**.** More specifically, the watering device **102, 502** is interchangeably mountable in a tool-free manner to the first mounting device **104** being the underground housing **104** or the second mounting device **504, 708, 812** being the above-ground plate **504, 708, 812.**

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100**: watering assembly
- **102**: watering device
- **104**: first mounting device/underground housing
- **106**: body
- **108**: cover
- **109**: opening
- **110**: water inlet
- **112**: base
- **114**: tap connector
- **116**: body
- **118**: nozzle
- **120**: button
- **122**: user interface
- **124**: base surface
- **126**: third coupling structure/T-profile
- **128**: main surface
- **A**: direction
- **130**: sixth coupling structure/groove
- **132**: first coupling structure
- **134**: side surface
- **136**: fourth coupling structure/hose connector
- **138**: side wall
- **500**: watering assembly
- **502**: watering device
- **504**: second mounting device/above-ground plate
- **506**: base
- **508**: base surface
- **510**: third coupling structure/T-profile
- **512**: sixth coupling structure/groove
- **514**: main surface
- **702**: base
- **704**: base surface
- **706**: third coupling structure/T-profile
- **708**: second mounting device/above-ground plate
- **710**: fifth coupling structure/spring-loaded button
- **712**: main surface
- **714**: second coupling structure/hole
- **716**: sixth coupling structure/groove
- **802**: base
- **804**: base surface
- **806**: second coupling structure/spring-loaded lever
- **812**: second mounting device/above-ground plate
- **814**: fifth coupling structure/notch
- **816**: main surface
- **818**: third coupling structure/T-profile
- **820**: sixth coupling structure/groove
- **900**: ground surface

## Claims

1. A watering assembly **(100, 500)** comprising
a watering device **(102, 502),**
a first mounting device **(104)** being an underground housing **(104)** installed below a ground surface **(900),** and having an opening **(109)** open to the ground surface **(900),** wherein the underground housing **(104)** is provided with a cover **(108)** at least partially covering the opening **(109),** and
a second mounting device **(504, 708, 812)** being an above-ground mounting device, particularly an above-ground plate, installed on the ground surface **(900),**
**characterized in that:**
the watering device is interchangeably, particularly tool-free interchangeably, mounted to the first mounting device **(104)** or the second mounting device **(504, 708, 812).**

2. The watering assembly **(100, 500)** according to claim 1,
wherein the watering device **(102, 502)** comprises a first coupling structure **(114, 132)** and a second coupling structure **(714, 806),**
wherein the first mounting device **(104)** comprises a fourth coupling structure **(136),**
wherein the second mounting device **(504, 708, 812)** comprises a fifth coupling structure **(710, 814),**
wherein the watering device **(102, 502)** is releasably mounted to the first mounting device **(104)** by functional interaction of the first coupling structure **(114, 132)** with the fourth coupling structure **(136)** such that a relative movement between the watering device **(102, 502)** and the first mounting device **(104)** is temporarily inhibited, and
wherein the watering device **(102, 502)** is releasably mounted to the second mounting device **(504, 708, 812)** by functional interaction of the second coupling structure **(714, 806)** with the fifth coupling structure **(710, 814)** such that a relative movement between the watering device **(102, 502)** and the second mounting device **(504, 708, 812)** is temporarily inhibited.

3. The watering assembly **(100, 500)** according to claim 2,
wherein the watering device **(102, 502)** further comprises a third coupling structure **(126, 510, 706, 818),**
wherein the first mounting device **(104)** and the second mounting device **(504, 708, 812)** each further comprises a sixth coupling structure **(130, 512, 716, 820),**
wherein the third coupling structure **(126, 510, 706, 818)** interacts with the sixth coupling structure **(130)** of the first mounting device **(104)** such that the watering device **(102, 502)** moves guided, particularly moves linearly guided, along a main surface **(128)** of the first mounting device **(104),** and
wherein the third coupling structure **(126, 510, 706, 818)** interacts with the sixth coupling structure **(512, 716, 820)** of the second mounting device **(504, 708, 812)** such that the watering device **(102, 502)** moves guided, particularly moves linearly guided, along a main surface **(514, 712, 816)** of the second mounting device **(504, 708, 812).**

4. The watering assembly **(100, 500)** according to claim 3,
wherein the first coupling structure **(114, 132),** the second coupling structure **(714, 806)** and the third coupling structure **(126, 510, 706, 818)** are formed apart from each other, particularly as separate parts.

5. The watering assembly **(100, 500)** according to claim 3 or claim 4,
wherein the third coupling structure **(126, 510, 706, 818)** further interacts with the sixth coupling structure **(130)** of the first mounting device **(104)** such that a movement of the watering device **(102, 502)** away, particularly substantially perpendicular away, from the main surface **(128)** of the first mounting device **(104)** is inhibited, and
wherein the third coupling structure **(126, 510, 706, 818)** further interacts with the sixth coupling structure **(512, 716, 820)** of the second mounting device **(504, 708, 812)** such that a movement of the watering device **(102, 502)** away, particularly substantially perpendicular away, from the main surface **(514, 712, 816)** of the second mounting device **(504, 708, 812)** is inhibited.

6. The watering assembly **(100, 500)** according to any one of the claims 3 to 5,
wherein the third coupling structure **(126, 510, 706, 818)** comprises a T-profile, particularly extending away from a base surface **(124, 508, 704, 804)** of the watering device **(102, 502),** and/or
wherein the sixth coupling structure **(130, 512, 716, 820)** comprises a groove **(130),** particularly a linear groove **(130),** formed on the main surface **(128)** of the first mounting device **(104)** and/or on the main surface **(514, 712, 816)** of the second mounting device **(504, 708, 812).**

7. The watering assembly **(100, 500)** according to claim 6,
wherein the T-profile **(126)** interacts with the groove **(130)** of the first mounting device **(104)** such that the watering device **(102, 502)** moves guided along the main surface **(128)** of the first mounting device **(104),** and
wherein the T-profile **(510, 706, 818)** interacts with the groove **(512, 716, 820)** of the second mounting device **(504, 708, 812)** such that the watering device **(102, 502)** moves guided along the main surface **(514, 712, 816)** of the second mounting device **(504, 708, 812).**

8. The watering assembly **(100, 500)** according to any one of the claims 2 to 7,
wherein the first coupling structure **(132)** comprises a tap connector **(114),** particularly mounted to a side surface **(134)** of the watering device **(102, 502),** and
wherein the fourth coupling structure **(136)** comprises a hose connector **(136),** particularly mounted on a side surface **(134)** of the first mounting device **(104).**

9. The watering assembly **(100, 500)** according to claim 8,
wherein the watering device **(102, 502)** is releasably mounted to the first mounting device **(104)** by functional interaction of the tap connector **(114)** and the hose connector **(136).**

10. The watering assembly **(100, 500)** according to any one of the claims 2 to 9,
wherein the second coupling structure **(714)** comprises a hole **(714),** particularly formed in a base surface **(704)** of the watering device **(102, 502),** and/or
wherein the fifth coupling structure **(710)** comprises a spring-loaded button **(710),** particularly provided at a main surface **(712)** of the second mounting device **(708).**

11. The watering assembly **(100, 500)** according to claim 10,
wherein the watering device **(102, 502)** is releasably mounted to the second mounting device **(708)** by functional interaction of the hole **(714)** and the spring-loaded button **(710).**

12. The watering assembly **(100, 500)** according to claim 10 or claim 11,
wherein the mounting of the watering device **(502)** to the second mounting device **(708)** is released by pressing the spring-loaded button **(710).**

13. The watering assembly **(100, 500)** according to any one of the claims 2 to 12,
wherein the second coupling structure **(806)** comprises a spring-loaded lever **(806)** comprising an extending portion on a free end, particularly a hemispherical-shaped extending portion, in particular wherein the spring-loaded lever **(806)** is provided at a bottom side **(804)** of the watering device **(102, 502),** and/or
wherein the fifth coupling structure **(812)** comprises a notch **(812),** particularly provided on a main surface **(816)** of the second mounting device **(812).**

14. The watering assembly **(100, 500)** according to claim 13,
wherein the watering device **(102, 502)** is releasably mounted to the second mounting device **(802)** by functional interaction of the spring-loaded lever **(806)** and the notch **(812).**

15. The watering assembly **(100, 500)** according to claim 13 or claim 14,
wherein the mounting of the watering device **(502)** to the second mounting device **(802)** is released by a movement of the watering device **(502)** opposite to an insertion direction of the third coupling structure **(126, 510, 706, 818)** relative to the sixth coupling structure **(130, 512, 716, 820).**
